# EUROPEAN PATENT APPLICATION

(11) **EP 1 403 511 A1**
(43) Date of publication of application: **31.03.2004**
(21) Application number: 03021745.9
(22) Date of filing: 25.09.2003
(51) Int. Cl.: F02N 17/00, F02D 41/06

(54) **Engine starting system**

(30) Priority: 30.09.2002 JP 2002287471; 30.09.2002 JP 2002287472
(71) Applicant: Mazda Motor Corporation, Aki-gun Hiroshima-ken (JP)
(72) Inventor: Kuroki, Masayuki, Aki-gun Hiroshima (JP); Tetsuno, Masayuki, Aki-gun Hiroshima (JP); Mamiya, Kiyotaka, Aki-gun Hiroshima (JP); Taga, Junichi, Aki-gun Hiroshima (JP); Araki, Keiji, Aki-gun Hiroshima (JP)
(74) Representative: Zinnecker, Armin, Dipl.-Ing.

(57) **Abstract**

An engine starting system includes an ECU for controlling engine restart operation. The ECU produces initial combustion (1) in a cylinder which is initially on a compression stroke at engine stop to force a piston in the cylinder downward and a piston in a cylinder which is initially on an expansion stroke upward, causing a pressure increase in the cylinder which was initially on the expansion stroke. Fuel is injected into the cylinder which was initially on the expansion stroke and a resultant mixture is ignited and combusted (2). Air necessary for succeeding combustion in the cylinder initially on the compression stroke is left unused after the initial combustion performed therein at engine stop, fuel is supplied into the cylinder after the initial combustion, and second combustion (3) in the cylinder initially on the compression stroke is produced when the piston in it now ascending passes its compression stroke top dead center.

## Description

### BACKGROUND OF THE INVENTION

### 1. Field of the Invention

The present invention relates to an engine starting system for automatically starting an engine which was once stopped for instance.

### 2. Description of the Related Art

New engine starting systems have been developed in recent years to reduce fuel consumption and carbon dioxide (CO₂) emissions, for instance. These starting systems are designed to cause an engine to automatically stop once during engine idle operation and automatically restart when conditions for restarting, such as a driver's operation for starting, have been met.

To automatically restart the engine which has once stopped, it is necessary that the engine be instantly started in response to the driver's starting operation.
For this reason, it is not desirable to use a conventionally known ordinary starting procedure, in which the engine is started by cranking its output shaft by means of a starting motor requiring a good deal of time up to the end of starting.

It is therefore desirable to supply fuel into a particular cylinder at engine stop and cause ignition and combustion in that cylinder such that the engine is instantly started with resultant energy. The energy of combustion can be caused to act in the forward running direction of the engine in this method if the fuel is supplied into a cylinder which is on an expansion stroke at engine stop. Although large energy would be obtained if the engine is under operating conditions because combustion occurs after a high-pressure state has been created in a combustion chamber, energy large enough for starting the engine would not often be obtained even if the fuel is supplied into the combustion chamber under engine stop conditions. This is because when the engine is stopped, air leaks out of the cylinder on the expansion stroke and the pressure in the combustion chamber drops.

Under these circumstances, a method for overcoming this problem is proposed in International Patent Publication Pamphlet No. 01/38726, for example. According to the proposed method, initial combustion is performed in a cylinder which is initially on a compression stroke at engine stop so that a piston in the cylinder on the compression stroke descends and a piston in a cylinder which is initially on an expansion stroke ascends, causing a pressure increase in the cylinder on the expansion stroke. Then, fuel is injected into the cylinder on the expansion stroke in this condition, and a resultant mixture is ignited and combusted in the cylinder on the expansion stroke to produce increased combustion energy acting in the forward running direction of the engine.

According to a starting system shown in the aforementioned Publication, the piston in the cylinder which is on the compression stroke at engine stop is caused to descend by the initial combustion, causing the engine to slightly turn in the reverse running direction and, then, the engine is caused to turn in the forward running direction by combustion in the cylinder which was initially on the expansion stroke. As a result, the piston in the cylinder which was initially on the compression stroke ascends and passes the top dead center, whereby the cylinder transfers to the expansion stroke. In this expansion stroke, combustion does not occur in the relevant cylinder because air in the cylinder has been used up in the initial combustion cycle and the amount of air necessary for ignition and combustion which should normally occur at about the compression stroke top dead center is not left in the cylinder. Therefore, the time interval from combustion in the cylinder initially on the expansion stroke to succeeding ignition/combustion occurring in another cylinder is so long that the engine speed would drop during this time interval, resulting in deterioration of engine starting performance.

### SUMMARY OF THE INVENTION

In view of the foregoing, it is an object of the invention to provide a starting system of an engine in which initial combustion is performed in a cylinder which is initially on a compression stroke at engine stop, causing the engine to turn slightly in the reverse running direction, succeeding combustion is performed in a cylinder which was initially on an expansion stroke to produce increased combustion energy, and ignition and combustion are performed in the cylinder in which the initial combustion was performed when the cylinder transfers to the expansion stroke after passing the compression stroke top dead center so that the time interval from the combustion in the cylinder initially on the expansion stroke to the succeeding combustion would not become too long, thereby enabling a significant improvement in engine starting performance.

According to the invention, an engine starting system for starting a multicylinder four-cycle engine, in which initial combustion under engine stop conditions is performed in a cylinder which is initially on a compression stroke at engine stop to force a piston in the cylinder downward and a piston in a cylinder which is initially on an expansion stroke upward, causing a pressure increase in the cylinder on the expansion stroke, fuel is injected into the cylinder on the expansion stroke, and a resultant mixture is ignited and combusted in the cylinder on the expansion stroke to accomplish engine startup, includes a controller for controlling the engine in such a manner that air necessary for succeeding combustion in the cylinder which was initially on the compression stroke is left unused after the initial combustion performed therein at engine stop, fuel is supplied into the cylinder on the compression stroke after the initial combustion, and second combustion in the cylinder which was initially on the compression stroke is performed when the piston in it now ascending passes the top dead center on its compression stroke.

In this construction, the initial combustion is performed in the aforementioned cylinder on the compression stroke at engine stop. As a result, the engine is caused to turn in its reverse running direction so that the piston in the cylinder which was initially on the expansion stroke approaches its top dead center, compressing air in the cylinder. As the fuel injected into the cylinder on the expansion stroke is burned in this condition, resultant combustion pressure efficiently acts on the piston in the cylinder, causing the engine to turn in its forward running direction. Furthermore, since air usable for subsequent combustion remains in the cylinder on the compression stroke after the initial combustion, it is possible to produce the second combustion in the cylinder which was initially on the compression stroke by supplying fuel, thereby providing an increased engine driving force in the forward running direction and enhanced engine starting performance.

According to the invention, the controller preferably adjusts the amount of fuel injected into the cylinder on the compression stroke at engine stop such that the air-fuel ratio in the cylinder becomes larger than the stoichiometric air-fuel ratio at the initial combustion. This makes it possible to ensure that air for subsequent combustion is left unused in an efficient way after the initial combustion in the cylinder which was initially on the compression stroke.

The controller may control the engine to introduce air into a combustion chamber of the cylinder which was initially on the compression stroke at engine stop after the initial combustion therein. One specific example of an arrangement for achieving this is such that the controller closes an intake valve of the cylinder on the compression stroke at engine stop at a point delayed by a specific crank angle into the compression stroke slightly beyond the bottom dead center on an intake stroke so that the intake valve of the cylinder on the compression stroke opens, thereby replacing burned gas in the cylinder with air fed from an intake port, when the piston in the cylinder is forced downward by the initial combustion therein.

This arrangement also serves to ensure that air for subsequent combustion is left unused after the initial combustion in the cylinder which was initially on the compression stroke.

In one preferred form of the invention, the engine starting system further includes a piston stop position detector for detecting the position where the piston in the cylinder which is initially on the expansion stroke is located at engine stop. wherein the controller produces the second combustion in the cylinder on the compression stroke when the position of the piston in the cylinder which is initially on the expansion stroke is located closer to its top dead center at engine stop, and otherwise not to produce a second combustion in the cylinder on the compression stroke from occurring, based on the result of detection by the piston stop position detector.

In this form of the invention, torque generated by combustion in the cylinder which was initially on the expansion stroke is low due to the small amount of air in the cylinder when the piston in the cylinder is located closer to its top dead center at engine stop compared to a case where the piston is located closer to its bottom dead center. However, since the piston in the cylinder on the compression stroke at engine stop is located closer to its bottom dead center, it is possible to provide an increased engine driving force in the forward running direction and enhanced engine starting performance by increasing the air-fuel ratio in the cylinder on the compression stroke at the initial combustion so that the second combustion in the cylinder is performed in an efficient fashion.

In another preferred form of the invention, the engine starting system further includes a piston stop position detector for detecting the position where the piston in the cylinder which is initially on the expansion stroke is located at engine stop, wherein the controller does not to produce the second combustion in the cylinder on the compression stroke from occurring when the position of the piston in the cylinder which is initially on the expansion stroke is located closer to its bottom dead center at engine stop, and otherwise produces the second combustion in the cylinder on the compression stroke at engine stop, based on the result of detection by the piston stop position detector.

In this form of the invention, torque generated by combustion in the cylinder which was initially on the expansion stroke is high due to the large amount of air in the cylinder when the piston in the cylinder is located closer to its bottom dead center at engine stop. Therefore, it is possible to start the engine with sufficient reliability even when the aforementioned second combustion is not produced in the cylinder which was initially on the compression stroke.

Preferably, the controller adjusts the amount of injected fuel in such a manner that the air-fuel ratio at the initial combustion in the cylinder which was initially on the compression stroke becomes approximately equal to or smaller than the stoichiometric air-fuel ratio in a case where the second combustion in the cylinder on the compression stroke at engine stop is not produced. This arrangement makes it possible to produce a higher torque for reversing the engine by the aforementioned initial combustion.

Preferably, the controller sets an overall air-fuel ratio, which is calculated from the total amount of injected fuel and the total amount of air used in the initial and second combustions in the cylinder which was initially on the compression stroke at engine stop, at a level smaller than the stoichiometric air-fuel ratio, more preferably, at a low level within a range in which the aforementioned second combustion can be produced by compressed self-ignition. This arrangement makes it possible to produce an increased torque for driving the engine in its forward running direction and ensure execution of desirable compressed self-ignition at the second combustion in the cylinder which was initially on the compression stroke. More particularly, although the aforementioned second combustion is performed by compressed self-ignition because the temperature in the cylinder which was initially on the compression stroke increases as a result of the aforementioned initial combustion, the engine starting performance will deteriorate due to the occurrence of a reversing torque if compressed self-ignition occurs too early. Under these circumstances, the occurrence of too early compressed self-ignition is avoided by decreasing the air-fuel ratio to use latent heat absorbed by evaporation, for example.

If the overall air-fuel ratio is set at a low level as stated above when engine temperature is low at engine startup, the timing of compressed self-ignition tends to be delayed compared to the case of high engine temperature.
As it becomes less necessary to decrease the air-fuel ratio for avoiding too early compressed self-ignition in this case, the overall air-fuel ratio should be corrected to a larger side.

According to the invention, the timing of compressed self-ignition at the second combustion in the aforementioned cylinder on the compression stroke can also be adjusted by fuel injection timing. Specifically, the controller may adjust the timing of injecting fuel for the second combustion in the cylinder which was initially on the compression stroke in such a manner that compressed self-ignition occurs in the cylinder at about the top dead center on its compression stroke.

According to the engine starting system of the invention, as combustion in the cylinder which is initially on the expansion stroke at engine stop is produced after causing the piston in the cylinder on the expansion stroke to ascend and its internal pressure to increase by performing the initial combustion in the cylinder which is initially on the compression stroke, the combustion pressure produced in the cylinder on the expansion stroke efficiently acts on the piston therein, making it possible to obtain an engine driving force in the forward running direction. In addition, air for the second combustion in the cylinder which was initially on the compression stroke is left unused after the initial combustion and the second combustion in the cylinder which was initially on the compression stroke is produced when the piston in it ascending after the initial combustion passes the top dead center on its compression stroke. It is therefore possible to efficiently produce the second combustion in the cylinder which was initially on the compression stroke after producing the initial combustion in the cylinder in preparation for combustion in the cylinder on the expansion stroke and thereby obtain an increased driving torque acting in the engine's forward running direction. Therefore, the engine starting system of the invention enables a significant improvement in engine starting performance when restarting the engine which has been automatically stopped during engine idle operation, for instance.

### BRIEF DESCRIPTION OF THE DRAWINGS

FIG. 1 is a schematic sectional view of an engine provided with a starting system according to an embodiment of the invention;
FIG. 2 is a schematic plan view of the engine of FIG. 1;
FIG. 3 is a flowchart showing a procedure for engine stop and restart control operation;
FIG. 4 is a flowchart showing a routine for detecting the positions of pistons at engine stop;
FIG. 5 is a flowchart showing a routine performed in first restart control mode of engine restart;
FIG. 6 is a flowchart showing a routine performed in second restart control mode of engine restart:
FIGS. 7A and 7B show crank angle signals output from two crank angle sensors when the engine is running in the forward direction and reverse direction, respectively;
FIG. 8 is a diagram showing ranges set for selection of a restart control mode depending on the positions of the pistons at engine stop;
FIG. 9 is an explanatory diagram showing variations in engine speed, throttle opening and negative intake air pressure at engine stop as well as successive cycles of individual cylinders;
FIG. 10 is an explanatory diagram showing successive cycles of the individual cylinders and their combustion timing at engine restart;
FIG. 11 is a time chart showing variations with time in engine speed, crank angle, pressures in the individual cylinders and indicated torque occurring at engine restart;
FIG. 12 is a diagram showing the relationships between the piston stop position at engine stop and a required air-fuel ratio for the cylinder on a compression stroke, the amount of air in the cylinder on the compression stroke, the amount of air in the cylinder on an expansion stroke, and the frequency of occurrences; and
FIG. 13 is a block diagram of a control system according to a variation of the embodiment of the invention.

### DETAILED DESCRIPTION OF THE PREFERRED EMBODIMENTS OF THE INVENTION

Now, specific embodiments of the invention are described below with reference to the appended drawings.

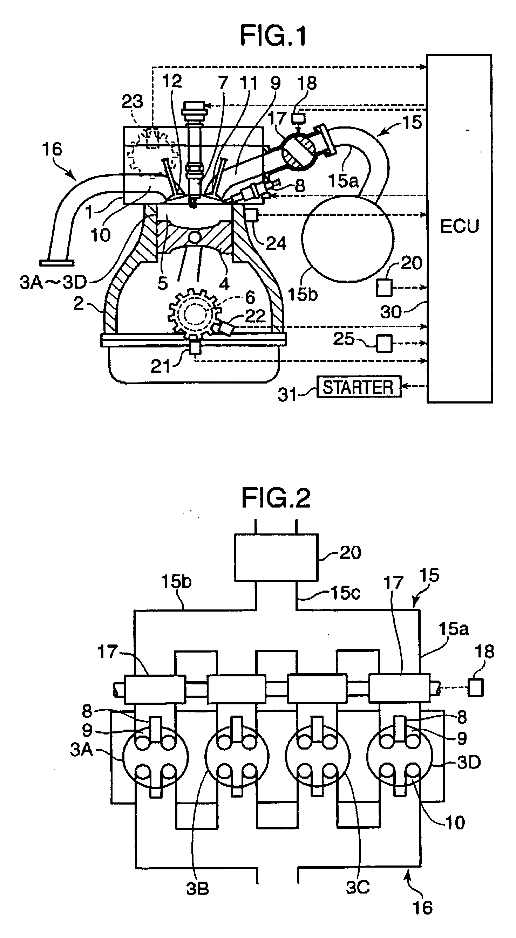

FIGS. 1 and 2 are diagrams schematically showing the construction of an engine employing a starting system according to an embodiment of the invention. As shown in these Figures, an engine body includes a cylinder head 1 and a cylinder block 2 provided with multiple cylinders.
In this embodiment, there are provided four cylinders 3A-3D. Pistons 4 are fitted in the individual cylinders 3A-3D whereby a combustion chamber 5 is formed above the piston 4 in each of the cylinders 3A-3D. The pistons 4 are connected to a crankshaft 6 by respective connecting rods.

There is installed a spark plug 7 at the top of the combustion chamber 5 in each of the cylinders 3A-3D with a far end of the spark plug 7 located in the combustion chamber 5.

There is further provided a fuel injector 8 at one side of the combustion chamber 5 for injecting fuel directly into the combustion chamber 5. Incorporating a needle valve and a solenoid which are not illustrated, the fuel injector 8 is actuated by a pulse signal. The fuel injector 8 opens when the pulse signal is input for a period of time corresponding to its pulse-length to inject an amount of fuel corresponding to valve opening time. The fuel injector 8 is oriented such that it sprays fuel toward the vicinity of the spark plug 7. The fuel is supplied to the fuel injector 8 from a fuel pump (not shown) via a fuel supply channel. A fuel supply system is constructed in such a manner that it produces a fuel pressure higher than the pressure in the combustion chamber 5 during each successive compression stroke.

There are formed intake ports 9 and exhaust ports 10 opening into the combustion chambers 5 of the individual cylinders 3A-3D with intake valves 11 and exhaust valves 12 provided in the intake ports 9 and the exhaust ports 10, respectively. The intake valves 11 and the exhaust valves 12 are actuated by valve actuating mechanisms (not shown) including camshafts. As will be later described in detail, opening and closing timing of the intake and exhaust valves 11, 12 of the individual cylinders 3A-3D is preset such that the cylinders 3A-3D perform their combustion cycles with a specific phase delay.

The intake ports 9 are connected to an intake passage 15 while the exhaust ports 10 an exhaust passage 16. Throttle valves 17 for regulating the quantity of intake air are provided in the intake passage 15. In this embodiment, the throttle valves 17 are provided in branched intake channels 15a close to the individual intake ports 9 to achieve high-speed response in controlling the quantity of intake air. More specifically, the intake passage 15 includes the branched intake channels 15a connecting to the individual cylinders 3A-3D downstream of a surge tank 15b, downstream ends of the branched intake channels 15a joining to the intake ports 9 of the respective cylinders 3A-3D. The throttle valves 17 of a multiple rotary valve type that simultaneously regulates the flow of intake air are provided near the downstream ends of the individual branched intake channels 15a. These throttle valves 17 are driven by an actuator 18.

An airflow sensor 20 for detecting the quantity of intake air is provided in a common intake passage 15c upstream of the surge tank 15b in the intake passage 15.
As will later described in detail, there are provided two (first and second) crank angle sensors 21, 22 on the crankshaft 6 for detecting its angle of rotation and outputting first and second crank angle signals having a specific amount of phase difference from each other. There is also provided cam angle sensors 23 on the aforementioned camshafts for detecting their specific rotational positions to give a cylinder identification signal. Other sensing devices necessary for engine control provided in addition to the foregoing include a water temperature sensor 24 for detecting the temperature of engine cooling water and an accelerator depression sensor 25 for detecting the amount of depression of an accelerator pedal.

Designated by the numeral 30 in FIG. 1 is an electronic control unit (ECU) serving as a means for engine control (controller). Upon receiving signals from the individual sensors 20-25 mentioned above, the ECU 30 outputs signals for controlling the amount of fuel to be injected and fuel injection timing to the fuel injectors 8, outputs an ignition timing control signal to an ignition device, and outputs a signal for controlling throttle opening to the actuator 18.

When specific conditions for engine stop have been met during engine idle operation, the engine is automatically stopped by interrupting fuel supply, for instance, and when conditions for engine restart have been met subsequently, the engine is automatically restarted. If any of the pistons 4 at rest is located at a position within a specific range at the beginning of engine restarting, initial combustion is performed in a cylinder which is initially on a compression stroke at engine stop so that the piston 4 in the cylinder on the compression stroke descends and the piston 4 in another cylinder which is initially on an expansion stroke ascends, causing a pressure increase in the cylinder on the expansion stroke. Then, fuel is injected into the cylinder on the expansion stroke in this condition, and a resultant mixture is ignited and combusted in the cylinder on the expansion stroke. On the other hand, the engine is controlled in such a manner that air necessary for succeeding combustion in the cylinder which was initially on the compression stroke is left unused in the combustion chamber 5 of the cylinder after the initial combustion and a particular amount of fuel appropriate for the amount of air remaining in the combustion chamber 5 is supplied into the cylinder at a proper point in time after the initial combustion so that combustion will occur again when the piston 4 now ascending in the relevant cylinder passes its compression stroke top dead center.

The engine of the present embodiment is so constructed as to selectively carry out, depending on where the pistons 4 are located at engine stop, first restart control mode in which the initial combustion is performed in the cylinder on the compression stroke, the succeeding combustion is performed in the cylinder on the expansion stroke, and recombustion is performed in the cylinder on the compression stroke in succession as described above, second restart control mode in which the initial combustion and the succeeding combustion are performed in the cylinder on the compression stroke and the cylinder on the expansion stroke, respectively, but recombustion in the cylinder on the compression is not performed stroke, or third restart control mode in which the engine is restarted by combustion performed in the cylinder on the expansion stroke and succeeding combustion performed in the cylinder on the compression stroke without producing the aforementioned initial combustion in the cylinder on the compression stroke while assisting the engine with a starter (starting motor) 31.

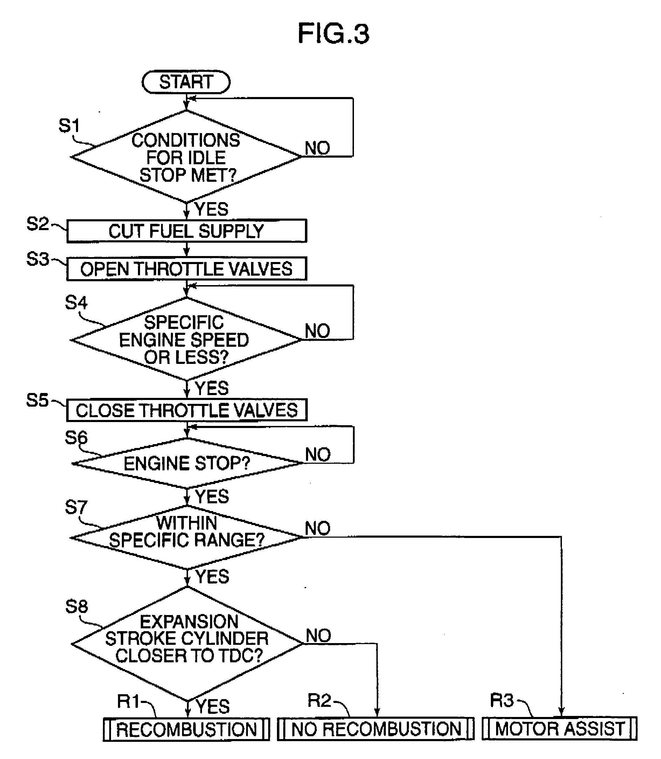

Engine stop and restart control operation performed by the ECU 30 is now described referring to flowcharts shown in FIGS. 3 to 6.

A procedure shown in the flowchart of FIG. 3 begins from a condition in which the engine is running. First, the ECU 30 judges whether the aforementioned specific conditions for engine stop at idle have been met in step S1. This judgment is made based on such sensor inputs as vehicle speed and engine temperature (temperature of the engine cooling water), in which the conditions for engine stop at idle are judged to have been met if the vehicle speed remains at zero for at least a specific period of time, the engine temperature falls within a specific range, and there is not any particular inconvenience in stopping the engine, for example.

When the conditions for engine stop at idle have been met, the ECU 30 cuts fuel supply to the individual cylinders 3A-3D (step S2). Then, the ECU 30 once opens the throttle valves 17 to a specific opening angle (step S3) and holds the throttle valves 17 in this condition until the engine speed decreases to a specific value or less (step S4). When the engine speed has decreased to a specific value or less, the ECU 30 closes the throttle valves 17 (step S5).

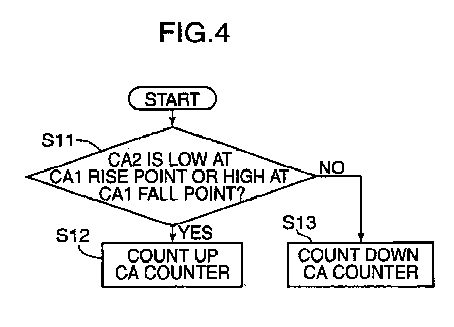

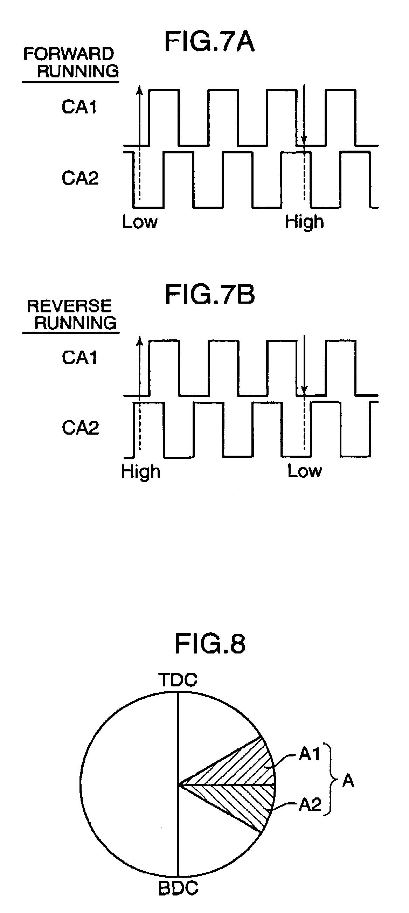

Next, the ECU 30 judges whether the engine has stopped in step S6. When the engine has stopped, the ECU 30 judges whether any of the pistons 4 has stopped within a specific range in step S7 based on the positions of the pistons 4 at rest detected by a later-described stop position detecting routine shown in FIG. 4. Here, the aforementioned "specific range" means a state in which the piston 4 in the cylinder on the expansion stroke is in a region A (including subregions A1 and A2) shown by hatching in FIG. 8, or the cylinder on the expansion stroke is in a middle portion of the expansion stroke. If the piston 4 in the cylinder on the expansion stroke is in this specific range, the ECU 30 proceeds to step S8 and judges whether the piston 4 in the cylinder is closer to the top dead center (TDC) than a specific position, or the piston 4 in the cylinder is positioned in the subregion A1 closer to TDC than the middle position of the region A shown in FIG. 8.

If the piston 4 in the cylinder on the expansion stroke is in the aforementioned specific range and positioned closer to TDC than the middle position of the region A (subregion A1) at engine stop according to the judgment results in steps S7 and S8, the ECU 30 carries out a routine R1 in the first restart control mode in which recombustion is performed. If the piston 4 in the cylinder on the expansion stroke is in the aforementioned specific range and positioned closer to the bottom dead center (BDC) than the middle position of the region A (subregion A2), the ECU 30 carries out a routine R2 in the second restart control mode in which recombustion is not performed. Also, if the piston 4 in the cylinder on the expansion stroke is not in the aforementioned specific range (region A), the ECU 30 carries out a motor assist routine R3 in the third restart control mode.

FIG. 4 shows the aforementioned stop position detecting routine. When this routine has started, the ECU 30 examines the first crank angle signal CA1 and the second crank angle signal CA2 output from the first and second crank angle sensors 21, 22, respectively, judges whether the second crank angle signal CA2 is at a low level at a leading edge of the first crank angle signal CA1, or the second crank angle signal CA2 is at a high level at a trailing edge of the first crank angle signal CA1. In other words, the ECU 30 judges whether the engine is running in the forward direction or reverse direction by determining whether there is a relationship shown in FIG. 7A or 7B in the phases of the first and second crank angle signals CA1, CA2 (step S11).

More specifically, if the engine is running in the forward direction, the second crank angle signal CA2 is delayed by about half a pulselength from the first crank angle signal CA1 as shown in FIG. 7A so that the second crank angle signal CA2 becomes "low" at the leading edge of the first crank angle signal CA1 and the second crank angle signal CA2 becomes "high" at the trailing edge of the first crank angle signal CA1. If the engine is running in the reverse direction, the second crank angle signal CA2 is advanced by about half the pulselength from the first crank angle signal CA1 as shown in FIG. 7B so that the second crank angle signal CA2 becomes "high" at the leading edge of the first crank angle signal CA1 and the second crank angle signal CA2 becomes "low" at the trailing edge of the first crank angle signal CA1 on the contrary. If the judgment result in step S11 is in the affirmative, the ECU 30 causes a crank angle counter for measuring changes in crank angle in the engine's forward running direction to count up (step S12). If the judgment result in step S11 is in the negative, on the other hand, the ECU 30 causes the crank angle counter to count down (step S13). The ECU 30 can determine the positions where the pistons 4 are located at engine stop by examining a count value of the crank angle counter.

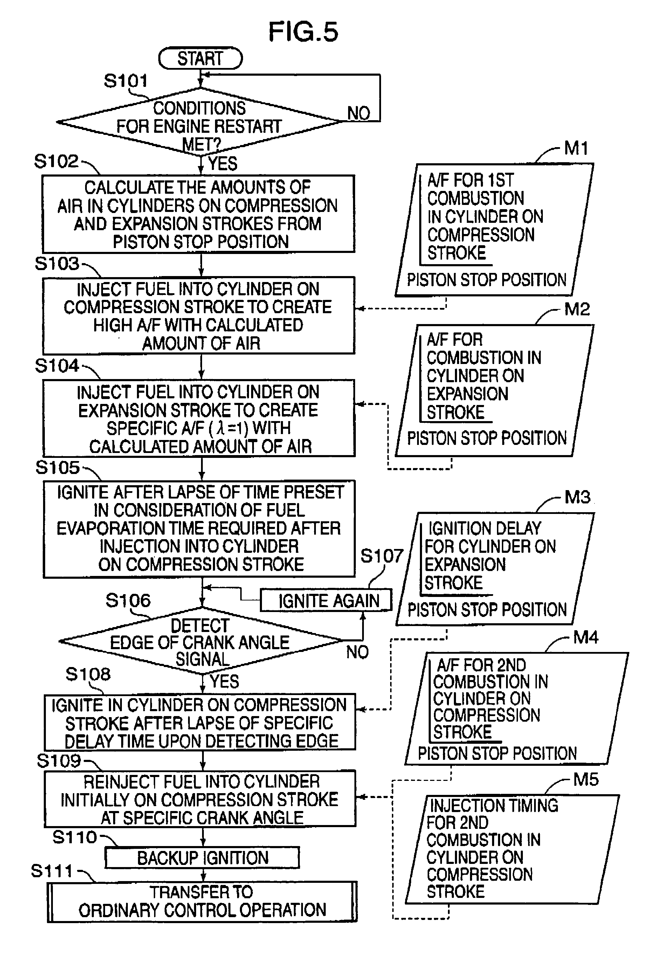

FIG. 5 shows the routine R1 carried out in the first restart control mode associated with recombustion when the judgment result in step S8 in the flowchart of FIG. 3 is in the affirmative. In this routine, the ECU 30 first judges whether the aforementioned specific conditions for engine restart have been met in step S101. If the conditions for engine restart have not been met, the ECU 30 waits until the conditions are satisfied.

When the conditions for engine restart have been met (YES in the judgment in step S101) as the accelerator pedal is depressed for starting the vehicle from rest or battery voltage has dropped, for example, the ECU 30 calculates the amounts of air in the cylinder on the compression stroke and the cylinder on the expansion stroke in step S102 based on the positions where the pistons 4 are located at engine stop. Specifically, the ECU 30 calculates current volumetric capacities of the combustion chambers 5 in the cylinder on the compression stroke and the cylinder on the expansion stroke. The cylinder on the expansion stroke is filled with fresh air immediately after engine stop because the engine stops after turning several times when the fuel is cut. In addition, internal pressures in the cylinder on the compression stroke and the cylinder on the expansion stroke become generally equal to the atmospheric pressure under engine stop conditions. Thus, the ECU 30 can calculate the amounts of air in the cylinder on the compression stroke and the cylinder on the expansion stroke.

Subsequently, the ECU 30 causes the engine to inject fuel into the cylinder on the compression stroke to create a specific air-fuel ratio suited for the initial combustion in the cylinder on the compression stroke with the calculated amount of air existing in the cylinder in step S103. The ECU 30 then controls the engine to inject fuel into the cylinder on the expansion stroke to create a specific air-fuel ratio suited for the succeeding combustion in the cylinder on the expansion stroke with the calculated amount of air existing in the cylinder in step S104. Here, the air-fuel ratio for the initial combustion in the cylinder on the compression stroke and the air-fuel ratio for the succeeding combustion in the cylinder on the expansion stroke are obtained from maps M1, M2 in accordance with the piston stop position. The maps M1, M2 are preset such that the air-fuel ratio at the initial combustion in the cylinder on the compression stroke becomes larger than the stoichiometric air-fuel ratio, whereas the air-fuel ratio the succeeding combustion in the cylinder on the expansion stroke becomes approximately equal to or slightly smaller than the stoichiometric air-fuel ratio.

Proceeding to step S105, the ECU 30 causes ignition in the cylinder on the compression stroke after a lapse of a particular period of time preset in consideration of fuel evaporation time required after fuel injection into the cylinder. In step S106, the ECU 30 judges whether the piston 4 in the cylinder has moved depending on whether an edge of the crank angle signals (i.e., the leading edge or trailing edge of the crank angle signals) is detected within a specific period of time after ignition. If the piston 4 has not moved due to misfire, the ECU 30 repeatedly causes ignition in the cylinder on the compression stroke (step S107).

When an edge of the crank angle signals has been detected (YES in the judgment in step S106), the ECU 30 proceeds to step S108 to cause ignition in the cylinder on the expansion stroke after a lapse of a particular delay time after detecting the edge. This delay time is obtained from a map M3 in accordance with the piston stop position.

Proceeding to step S109, the ECU 30 causes the engine to inject fuel again into the cylinder which was initially on the compression stroke when a specific crank angle (i.e., a second injection point for the cylinder on the compression stroke) has been reached. In this step, the ECU 30 calculates the amount of fresh air remaining in the cylinder on the compression stroke, obtains an air-fuel ratio suited for a second combustion in the cylinder on the compression stroke from a map M4 in accordance with the aforementioned piston stop position, calculates the amount of fuel to be injected based on the amount of fresh air and the air-fuel ratio thus obtained, and sets the second injection point for the cylinder on the compression stroke referring to a map M5 such that compressed self-ignition would occur with appropriate timing in the cylinder.

While compressed self-ignition is performed at this cycle of fuel injection, the ECU 30 makes a backup ignition at about TDC to make up for potential misfire (step S110).

Upon completion of the aforementioned restart control operation, the ECU 30 transfers to ordinary control operation (step S111).

While no flowchart is provided for illustrating details of the routine R2 performed in the second restart control mode without recombustion when the judgment result in step S8 in the flowchart of FIG. 3 is in the negative, the routine R2 carried out by the ECU 30 is generally the same as steps S101 to S108 of the routine R1 of the first restart control mode (FIG. 5) except that, in a step corresponding to step S103. the air-fuel ratio for the cylinder which was initially on the compression stroke obtained from a map in accordance with the aforementioned piston stop position is approximately equal to or smaller than the stoichiometric air-fuel ratio.

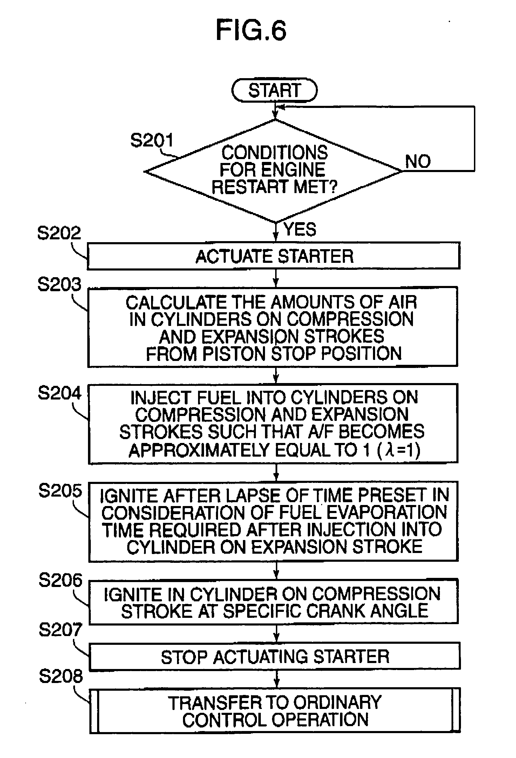

FIG. 6 shows the motor assist routine R3 carried out in the third restart control mode when the judgment result in step S8 in the flowchart of FIG. 3 is in the negative. In this routine, the ECU 30 first judges whether the specific conditions for engine restart have been met in step S201. If the conditions for engine restart have not been met, the ECU 30 waits until the conditions are satisfied.

When the conditions for engine restart have been met (YES in the judgment in step S201), the ECU 30 actuates the starter 31 in step S202, the ECU 30 calculates the amounts of air in the cylinder on the compression stroke and the cylinder on the expansion stroke in step S203 based on the positions where the pistons 4 are located at engine stop, and causes the engine to inject fuel into the cylinder on the compression stroke and the cylinder on the expansion stroke such that the air-fuel ratio in these cylinders becomes approximately equal to the stoichiometric air-fuel ratio in step S204. Then, in step S205, the ECU 30 causes ignition in the cylinder on the expansion stroke after a lapse of a particular period of time preset in consideration of fuel evaporation time required after fuel injection into the cylinder.

Next, the ECU 30 causes ignition in the cylinder on the compression stroke when a specific crank angle has been reached in step S206. Thereafter, the ECU 30 is being shifted to perform an ordinary start control operation and when an engine rotational speed reaches to a point where a drive of a starter 31 is determined to be unnecessary, then the ECU 30 stops actuating the starter 31 (step S207) and then transfers to ordinary control operation (step S208).

The working of the starting system of the present embodiment is now discussed.

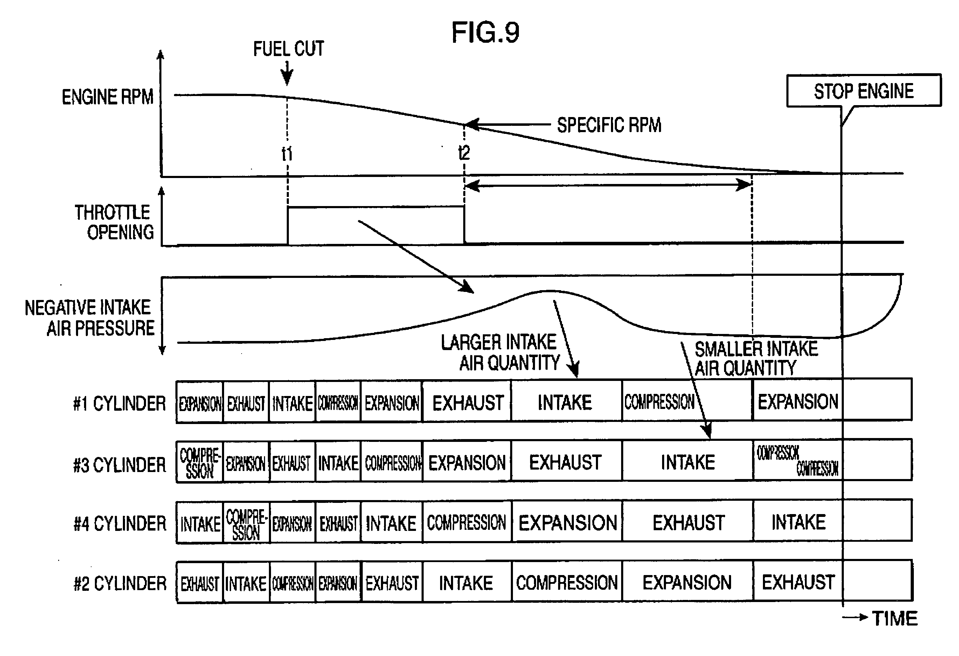

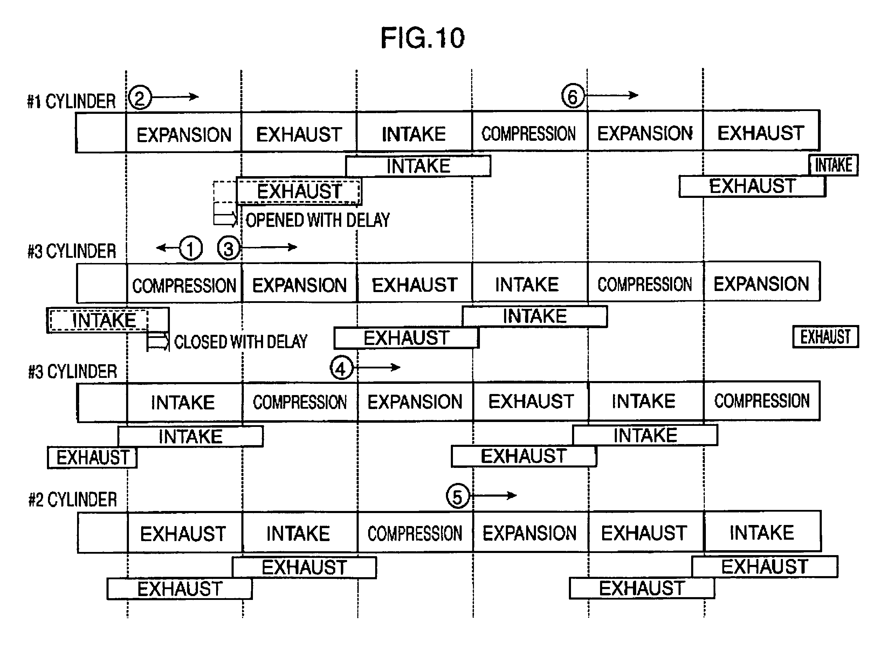

A multicylinder four-cycle engine is constructed in such a fashion that individual cylinders undergo repeated cycles of intake, compression, expansion and exhaust strokes with the earlier-mentioned specific phase delay. The cylinders 3A-3D of the four-cylinder engine of this embodiment. which are now referred to as the first cylinder 3A, the second cylinder 3B, the third cylinder 3C and the fourth cylinder 3D in this order as viewed from one end of cylinder bank, undergo the aforementioned cycles with a successive phase delay of 180° in the order or the first to fourth cylinders 3A-3D as shown in FIGS. 9 and 10.

When the engine being operated goes into a specific idle state in which no engine output is needed, fuel supply is interrupted at a point in time t1 shown in FIG. 9 when the conditions for engine stop are satisfied based on the result of the aforementioned judgment concerning whether the conditions have been met, whereby the engine speed gradually decreases, causing the engine to eventually stop. In this embodiment, the engine is so controlled as to open the throttle valves 17 up to the earlier-mentioned specific opening angle at the point in time t1 and then close the throttle valves 17 at a point in time t2 when the engine speed has dropped down to a preset value to increase the probability that the piston stop position falls within a desirable range by use of air pressures in the cylinders 3A-3D.

More specifically, as the throttle valves 17 are opened to the specific opening angle during a period from the point in time t1 to the point in time t2, negative intake air pressure momentarily decreases (the quantity of intake air increases) with a slight time delay and the negative intake air pressure increases (the quantity of intake air decreases) subsequently. Parameters such as the engine speed are preset such that the period of time during which the negative intake air pressure is momentarily decreased becomes generally equal to the duration of the intake stroke of the cylinder which is on the expansion stroke at engine stop. With this arrangement, the quantity of intake air drawn into the individual cylinders 3A-3D before engine stop increases, particularly in the cylinder (the first cylinder 3A in the example of FIG. 9) which is on the expansion stroke at engine stop, compared to a case in which the throttle valves 17 are instantly closed at the point in time t1 when the conditions for engine stop have been satisfied.

When the engine is going to stop, air in the cylinder on the compression stroke is compressed, producing a pressure exerted on the piston 4 in the relevant cylinder, as the piston 4 approaches TDC. The engine is caused to turn in the reverse direction since the piston 4 in the cylinder on the compression stroke is forced back toward BDC by this pressure. As a result, the piston 4 in the cylinder which was initially on the expansion stroke moves toward TDC, causing a pressure increase in the relevant cylinder, so that the piston 4 in the cylinder on the expansion stroke is forced back toward BDC by this pressure. The pistons 4 stop after making some oscillatory motion in this fashion. The closer the pistons 4 in the cylinder on the compression stroke and the cylinder on the expansion stroke to their TDC, the larger the pushing forces produced in these cylinders. Therefore, the pistons 4 often stop at about the midpoint of their strokes.

Particularly because the backward pushing forces exerted on the pistons 4 are increased by increasing the quantity of intake air before engine stop when the pistons 4 approach TDC as stated above, the probability that the pistons 4 will stop within a specific range around the midpoint of their strokes is increased. Furthermore, if the throttle valves 17 are controlled in the aforementioned fashion such that the quantity of intake air drawn into the cylinder on the expansion stroke becomes larger than the quantity of intake air drawn into the cylinder on the compression stroke, the piston 4 in the cylinder on the expansion stroke will stop slightly closer to BDC within the range around the midpoint of the stroke with a higher probability.

Since the engine turns several times due to inertia from the point in time t1 of cutting the fuel supply up to a point of complete engine stop as already mentioned, burned gas is expelled from the cylinders and even the cylinder on the expansion stroke is almost completely filled with fresh air. When the engine stops, gases and air in the cylinders immediately leak out, resulting in a pressure decrease even in the cylinder on the compression stroke. Accordingly, there is created a state in which every cylinder is filled with fresh air at atmospheric pressure soon after engine stop.

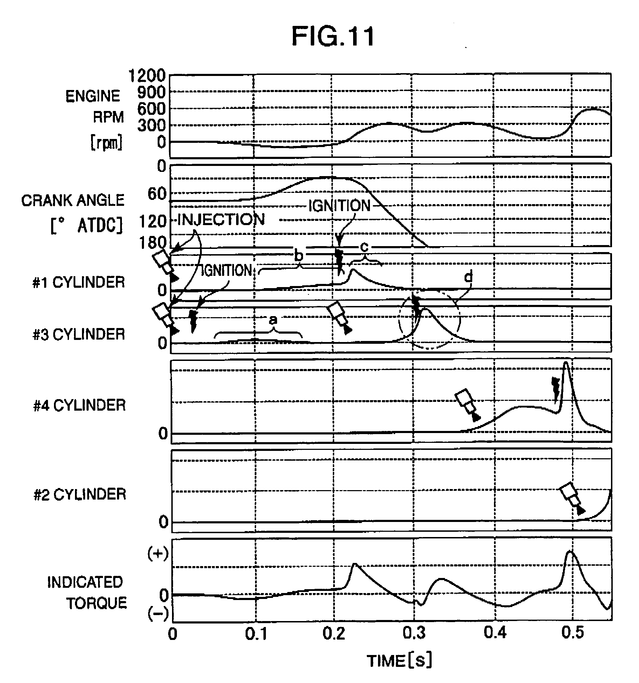

When the conditions for engine restart have been met after engine stop, the engine restart control operation is performed automatically, in which the ECU 30 carries out the routine R1 (FIG. 5) in the first restart control mode if the cylinder on the expansion stroke is in the aforementioned specific range around the midpoint of the stroke and positioned within the subregion A1 closer to TDC. FIG. 10 illustrates successive cycles of the individual cylinders 3A-3D and their combustion timing (occurring in the order of (1), (2), (3) and so on as illustrated) applicable when the engine is restarted in the first restart control mode, in which arrows show the engine turning direction at each combustion cycle. FIG. 11 shows variations with time in the engine speed, crank angle, pressures in the individual cylinders 3A-3D and indicated torque occurring at engine restart in the first restart control mode.

Referring to these Figures, the initial combustion ((1) in FIG. 10) is performed in the cylinder on the compression stroke (the third cylinder 3C in the illustrated example) at an air-fuel ratio larger than the stoichiometric air-fuel ratio, and a combustion pressure (portion "a" in FIG. 11) produced by the initial combustion forces the piston 4 in the cylinder on the compression stroke down toward BDC, causing the engine to turn in the reverse direction when the engine is restarted in the first restart control mode. Since the piston 4 in the cylinder on the expansion stroke (the first cylinder 3A in the illustrated example) approaches TDC as a consequence, air in the cylinder on the expansion stroke is compressed, causing a pressure increase in the cylinder (portion "b" in FIG. 11). The cylinder on the expansion stroke is ignited to combust fuel already injected into the cylinder at a point in time when the piston 4 has sufficiently approached TDC ((2) in FIG. 10), and the engine is caused to turn in the forward running direction by a resultant combustion pressure (portion "c" in FIG. 11). Subsequently, fuel is injected into the cylinder on the compression stroke with appropriate timing so that the second combustion occurs in the cylinder at about TDC ((3) in FIG. 10). A resultant combustion pressure (portion "d" in FIG. 11) serves to provide an enhanced engine driving force.

The aforementioned second combustion in the cylinder on the compression stroke is made possible by unused air which remains in the cylinder because the initial combustion in the same cylinder on the compression stroke is made at a high air-fuel ratio (lean mixture). Since the fuel is injected into the cylinder on the compression stroke and a resultant air-fuel mixture is compressed under conditions where the internal pressure of the cylinder has been increased by the initial combustion, the second combustion is produced by compressed self-ignition.

It is preferable that the air-fuel ratio at the second combustion in the cylinder on the compression stroke (that corresponds to an overall air-fuel ratio calculated from the total amount of injected fuel and the total amount of air used in the initial and second combustions in the cylinder on the compression stroke) be set at a level smaller than the stoichiometric air-fuel ratio, as a high torque is obtained from the second combustion by doing so. An undesirable reversing torque would be produced if compressed self-ignition occurs at an earlier point in time than the compression stroke top dead center due to an excessive temperature is created by the initial combustion in the cylinder on the compression stroke. When such a situation is likely to occur (due to high engine temperature, for example), it is preferable to delay the timing of compressed self-ignition by decreasing the air-fuel ratio at the second combustion and thereby using latent heat absorbed by evaporation, for example. If there is made an arrangement to perform backup ignition at the aforementioned second combustion (combustion by compressed self-ignition) as shown in FIG. 5, it is possible to ensure reliable ignition and combustion even at a failure in compressed self-ignition which might rarely occur.

Since the driving force exerted on the engine in its forward running direction is obtained by the second combustions in the cylinder on the compression stroke as stated above, it is possible to prevent the engine from stopping before the cylinder undergoing a subsequent compression stroke reaches its compression TDC. After the cylinder on the subsequent compression stroke has reached the compression TDC, combustion is performed successively in the individual cylinders 3A-3D according to an ordinary control procedure, whereby the above-described engine restart control operation is finished.

When the cylinder on the expansion stroke is in the aforementioned specific range around the midpoint of the stroke and positioned within the subregion A2 closer to BDC, the ECU 30 carries out engine restart control operation (routine R2) in the second restart control mode.

In the control operation performed in the second restart control mode, the initial combustion (corresponding to (1) in FIG. 10) is made in the cylinder on the compression stroke at an air-fuel ratio approximately equal to or smaller than the stoichiometric air-fuel ratio. As a result, the piston 4 in the cylinder on the compression stroke is forced downward so that the engine turns in the reverse direction, causing a pressure increase the cylinder on the expansion stroke as the piston 4 approaches TDC and air in the cylinder is compressed. Then, the cylinder on the expansion stroke is ignited to combust fuel already injected into the cylinder at a point in time when the piston 4 has sufficiently approached TDC ((2) in FIG. 10), so that the engine is now caused to turn in the forward running direction in the same fashion as in the control operation performed in the first restart control mode. In the second restart control mode, however, combustion ((3) in FIG. 10) is not produced in the cylinder on the compression stroke when its piston 4 passes TDC after the combustion in the cylinder on the expansion stroke, and the engine is kept turning by inertia until the cylinder undergoing a subsequent compression stroke reaches its compression TDC. Then, the engine transfers to the ordinary control operation, whereby the above-described engine restart control operation is finished.

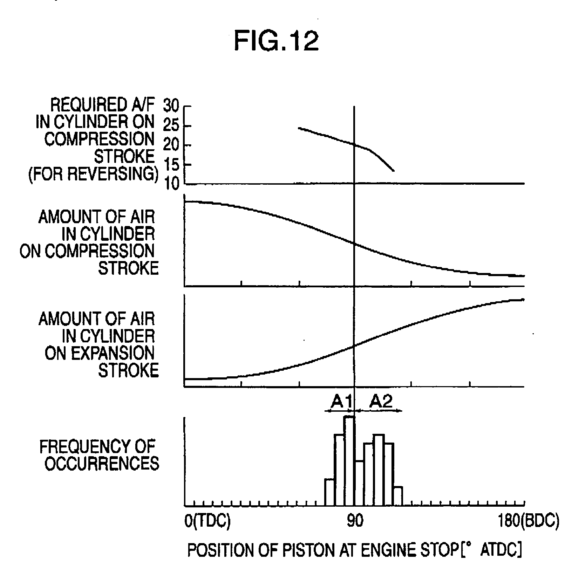

The engine is restarted in an efficient fashion by selectively using the first restart control mode and the second restart control mode depending on the engine stop position as discussed above. This point in further explained referring also to FIG. 12.

FIG. 12 shows the relationships between the piston stop position at engine stop and a required air-fuel ratio for the initial combustion (for engine reversing) performed in the cylinder on the compression stroke, the amount of air in the cylinder on the compression stroke, the amount of air in the cylinder on the expansion stroke, and the frequency of occurrences. As can be seen this Figure, the closer to TDC the piston 4 in the cylinder on the expansion stroke (the closer to BDC the piston 4 in the cylinder on the compression stroke) at engine stop, the smaller the amount of air in the cylinder on the expansion stroke and the larger the amount of air in the cylinder on the compression stroke, and on the contrary, the closer to BDC the piston 4 in the cylinder on the expansion stroke (the closer to TDC the piston 4 in the cylinder on the compression stroke) at engine stop, the larger the amount of air in the cylinder on the expansion stroke and the smaller the amount of air in the cylinder on the compression stroke.

In the initial combustion in the cylinder on the compression stroke, it is required to produce a torque necessary for reversing the engine up to a specific position where the piston 4 in the cylinder on the compression stroke is located slightly before it reaches BDC (slightly before the piston 4 in the cylinder on the expansion stroke reaches TDC. If the piston 4 in the cylinder on the compression stroke is located closer to TDC, the amount of air in the cylinder on the expansion stroke is small and the torque required for reversing the engine up to the aforementioned specific position is relatively high, so that the required air-fuel ratio is low. In contrast, if the piston 4 in the cylinder on the compression stroke is located closer to BDC, the amount of air in the cylinder on the expansion stroke is large and the torque required for reversing the engine up to the aforementioned specific position is relatively low, so that the required air-fuel ratio is high.

In the cylinder on the expansion stroke, the closer to BDC the piston 4, the larger the amount of air in the cylinder so that a larger quantity of fuel can be combusted.

Therefore, when the piston 4 in the cylinder on the expansion stroke is located within the subregion A2 closer to BDC than the midpoint of the stroke (the piston 4 in the cylinder on the compression stroke is closer to TDC) at engine stop. the air-fuel ratio in the cylinder on the compression stroke for the initial combustion is decreased to satisfy the aforementioned requirement and the second combustion at about the compression stroke top dead center is not produced because air usable for combustion is not left after the initial combustion. However, a relatively large amount of air exists in the cylinder on the expansion stroke. Thus, an amount of fuel corresponding to the amount of air present is injected into the cylinder on the expansion stroke and the resultant air-fuel mixture is compressed, ignited and combusted, whereby the engine can be turned until the cylinder on the compression stroke exceeds the compression stroke top dead center and the cylinder undergoing a subsequent compression stroke reaches its compression TDC to accomplish engine restart.

On the other hand, when the piston 4 in the cylinder on the expansion stroke is located within the subregion A1 closer to TDC than the midpoint of the stroke (the piston 4 in the cylinder on the compression stroke is closer to BDC) at engine stop, the combustion in the expansion stroke produces a lower torque compared to the case where the piston 4 is located within the subregion A2 because the amount of air in the cylinder on the expansion stroke is small. However, since the air-fuel ratio in the cylinder on the compression stroke for the initial combustion is decreased to satisfy the aforementioned requirement, air consequently left in the cylinder after the initial combustion is used to produce the second combustion in the cylinder on the compression stroke, thereby supplementing the torque for driving the engine in the forward running direction. A sufficient amount of torque for accomplishing engine restart is obtained by a combination of the combustion in the cylinder on the expansion stroke and the second combustion in the cylinder on the compression stroke.

Overall, the engine can be restarted in a desirable fashion in the aforementioned first restart control mode or second restart control mode in most cases since the piston positions almost always fall within the aforementioned subregions A1 and A2 (region A) at engine stop as shown also in FIG. 12.

In rare circumstances, however, the piston stop position may not fall within the aforementioned region A. If the piston 4 in the cylinder on the expansion stroke stops at a position closer to TDC (the piston 4 in the cylinder on the compression stroke stops at a position closer to BDC) than the region A, it becomes impossible to ensure a sufficient amount of movement of the engine in its reversing direction and the torque obtained by the combustion in the cylinder on the expansion stroke decreases due to the reduced amount of air in the cylinder on the expansion stroke. If the piston 4 in the cylinder on the expansion stroke stops at a position closer to BDC (the piston 4 in the cylinder on the compression stroke stops at a position closer to TDC) than the region A, on the contrary, a sufficient torque for reversing the engine is not obtained due to a reduction in the amount of air in the cylinder on the expansion stroke. In these cases, it is difficult to restart the engine in either the first restart control mode or the second restart control mode.

under these circumstances, the third restart control mode is selected to restart the engine with the assistance of the starter 31 only when the piston positions do not fall the aforementioned region A at engine stop.

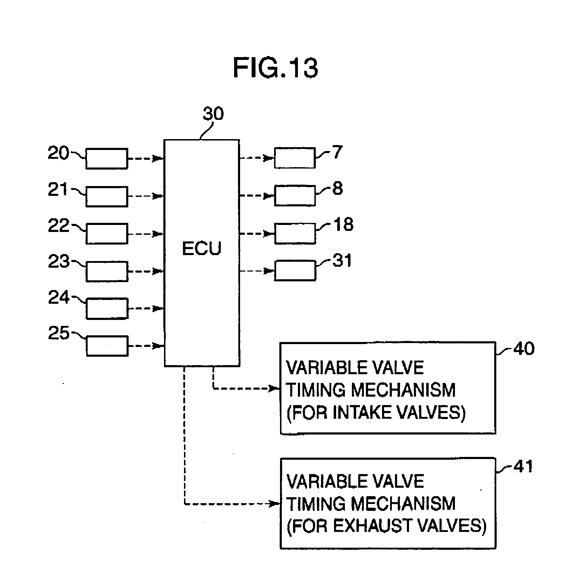

The starting system of the invention is not limited in its specific construction to the foregoing embodiment but may be modified in various ways. Given below are examples of such modifications that can be made without departing from the spirit and scope of this invention.
(1) While a certain amount of air is left unused in the cylinder on the compression stroke after the initial combustion by increasing the air-fuel ratio to a level larger than the stoichiometric air-fuel ratio when restarting the engine in the first restart control mode in the foregoing embodiment, an additional amount of air may be supplied into the cylinder after the initial combustion therein instead. For example, the foregoing embodiment may be modified in such a manner that the valve actuating mechanism for the intake valves 11 includes a variable valve timing mechanism 40 which makes it possible to vary at least intake valve closing timing as shown in FIG. 13, and the closing timing of the intake valve 11 for the cylinder on the compression stroke is delayed than normal so that the intake valve 11 is closed at a point delayed by a specific small crank angle into the compression stroke slightly beyond BDC as shown in FIG. 10 when the engine resumes combustions cycles.
   In this modification, the intake valve 11 for the cylinder on the compression stroke is opened when the engine has turned back toward an advanced side from the intake valve closing point by the initial combustion in the cylinder on the compression stroke, whereby part of gas in the cylinder is replaced by fresh air to supplement air to be used for the second combustion. In addition to this effect, the modification provides an advantageous effect for engine restart in that the pressure in the cylinder on the compression stroke drops when its intake valve 11 is opened after the initial combustion, and therefore, a resisting force exerted on the piston 4 in the cylinder on the compression stroke is reduced when the engine turns in the forward running direction as a result of subsequent combustion in the cylinder on the compression stroke.
(2) In addition to the provision of the variable valve timing mechanism 40 in the aforementioned modification, the embodiment may be modified in such a manner that the valve actuating mechanism for the exhaust valves 12 further includes a variable valve timing mechanism 41 which makes it possible to vary at least exhaust valve opening timing (refer to FIG. 13), and the opening timing of the exhaust valve 12 for the cylinder which is initially on the expansion stroke at engine stop is delayed than normal when the cylinder first undergoes the exhaust stroke after engine restart so that the exhaust valve 12 opens approximately at BDC as shown in FIG. 10.
   In this modification, energy of combustion in the cylinder on the expansion stroke efficiently acts on the piston 4 in the cylinder up to approximately BDC without escaping into the exhaust passage 16, resulting in an improvement in engine starting performance.
(3) In the example shown in FIG. 5, fuel for the initial combustion in the cylinder on the compression stroke is injected when the conditions for engine restart have been met, and fuel for the succeeding combustion in the cylinder on the expansion stroke approximately at the same time to provide time required for fuel evaporation from fuel injection to ignition in the cylinder on the expansion stroke. This may be modified in such a manner that fuel for the cylinder on the expansion stroke is injected upon completion of the initial combustion in the cylinder on the compression stroke. This modification is advantageous in that fuel injection into the cylinder on the expansion stroke can be stopped when the initial combustion in the cylinder on the compression stroke has failed (even when ignition has been attempted repeatedly), making it possible to avoid unnecessary fuel injection. A desirable step to be taken when the initial combustion in the cylinder on the compression stroke has failed despite repetitive ignition is to shift to the third restart control mode to restart the engine with the assistance of the starter 31.
(4) While the air-fuel ratio for the second combustion in the cylinder on the compression stroke is set in accordance with the piston stop position in the example shown in FIG. 5, it is more preferable to further regulate the air-fuel ratio for the second combustion in the cylinder on the compression stroke (that corresponds to an overall air-fuel ratio calculated from the total amount of injected fuel and the total amount of air used in the initial and second combustions in the cylinder on the compression stroke). In this case, the air fuel ratio for the second combustion in the cylinder on the compression stroke is set at a low level within a range in which compressed self-ignition is possible to prevent compressed self-ignition from occurring too early in the cylinder on the compression stroke when the engine temperature is high. When the engine temperature is low, the air-fuel ratio for the second combustion in the cylinder on the compression stroke should be corrected to a larger side to make up for the tendency toward delayed compressed self-ignition timing compared to the case of high engine temperature.
(5) While the timing of compressed self-ignition is adjusted by controlling the air-fuel ratio for the second combustion in the cylinder on the compression stroke in the foregoing embodiment, injection timing may be adjusted by retarding fuel injection when the engine temperature is high compared to the case of low engine temperature, for example, such that compressed self-ignition occurs at an appropriate point at about TDC.

Although the present invention has been fully described by way of example with reference to the accompanying drawings, it is to be understood that various changes and modifications will be apparent to those skilled in the art. Therefore, unless otherwise such changes and modifications depart from the scope of the present invention hereinafter defined, they should be construed as being included therein.

## Claims

1. An engine starting system for starting a multicylinder four-cycle engine in which initial combustion under engine stop conditions is performed in a cylinder which is initially on a compression stroke at engine stop to force a piston in said cylinder downward and a piston in a cylinder which is initially on an expansion stroke upward, causing a pressure increase in said cylinder on the expansion stroke, fuel is injected into said cylinder on the expansion stroke, and a resultant mixture is ignited and combusted in said cylinder on the expansion stroke to accomplish engine startup, the starting system comprising:
a controller for controlling the engine in such a manner that air necessary for succeeding combustion in said cylinder which was initially on the compression stroke is left unused after the initial combustion performed therein at engine stop, fuel is supplied into said cylinder on the compression stroke after the initial combustion, and second combustion in said cylinder which was initially on the compression stroke is performed when the piston in it now ascending passes the top dead center on its compression stroke.

2. The engine starting system according to claim 1,
**characterized in that** said controller adjusts the amount of fuel injected into said cylinder on the compression stroke at engine stop such that the air-fuel ratio in said cylinder becomes larger than the stoichiometric air-fuel ratio at the initial combustion.

3. The engine starting system according to claim 1, **characterized in that** said controller controls the engine to introduce air into a combustion chamber of said cylinder which is initially on the compression stroke at engine stop after the initial combustion therein.

4. The engine starting system according to claim 3, **characterised in that** said controller closes an intake valve of said cylinder on the compression stroke at engine stop at a point delayed by a specific crank angle into the compression stroke slightly beyond the bottom dead center on an intake stroke so that the intake valve of said cylinder on the compression stroke opens, thereby replacing burned gas in said cylinder with air fed from an intake port, when the piston in said cylinder is forced downward by the initial combustion therein.

5. The engine starting system according to one of claims 1 to 4 further comprising:
a piston stop position detector for detecting the position where the piston in said cylinder which is initially on the expansion stroke is located at engine stop;
**characterized in that** said controller produces the second combustion in said cylinder on the compression stroke when the position of the piston in said cylinder which is initially on the expansion stroke is located closer to its top dead center at engine stop, and otherwise not to produce the second combustion in said cylinder on the compression stroke from occurring, based on the result of detection by said piston stop position detector.

6. The engine starting system according to one of claims 1 to 4 further comprising:
a piston stop position detector for detecting the position where the piston in said cylinder which is initially on the expansion stroke is located at engine stop;
**characterized in that** said controller does not produce the second combustion in said cylinder on the compression stroke when the position of the piston in said cylinder which is initially on the expansion stroke is located closer to its bottom dead center at engine stop, and otherwise produces the second combustion in said cylinder on the compression stroke at engine stop, based on the result of detection by said piston stop position detector.

7. The engine starting system according to claim 5 or 6, **characterized in that** said controller adjusts the amount of injected fuel in such a manner that the air-fuel ratio at the initial combustion in said cylinder which was initially on the compression stroke becomes approximately equal to or smaller than the stoichiometric air-fuel ratio in a case where the second combustion in said cylinder on the compression stroke at engine stop is not produced.

8. The engine starting system according to one of claims 1 to 7, **characterized in that** said controller sets an overall air-fuel ratio, which is calculated from the total amount of injected fuel and the total amount of air used in the initial and second combustions in said cylinder which was initially on the compression stroke at engine stop, at a level smaller than the stoichiometric air-fuel ratio.

9. The engine starting system according to claim 8, **characterized in that** said controller sets said overall air-fuel ratio at a low level within a range in which said second combustion can be produced by compressed self-ignition.

10. The engine starting system according to claim 8 or 9, **characterized in that** said overall air-fuel ratio is corrected to a larger side when engine temperature is low at engine startup.

11. The engine starting system according to one of claims 1 to 7, **characterized in that** said controller adjusts the timing of injecting fuel for the second combustion in said cylinder which was initially on the compression stroke in such a manner that compressed self-ignition occurs in said cylinder at about the top dead center on its compression stroke.
